# FASCICULE DE BREVET EUROPEEN

(11) **EP 2 802 760 B1**
(45) Date de publication et mention de la délivrance du brevet: **28.12.2016**
(21) Numéro de dépôt: 13701861.0
(22) Date de dépôt: 11.01.2013
(51) Int. Cl.: F02D 41/02, F01N 11/00, F01N 3/20

(54) **GESTION OPTIMISÉE D'UN CATALYSEUR SCR PAR RÉGÉNÉRATIONS PÉRIODIQUES D'UN FILTRE À PARTICULES**
OPTIMIERTE VERWALTUNG EINES SCR-KATALYSATORS MITTELS PERIODISCHER REGENERATION EINES PARTIKELFILTERS
OPTIMIZED MANAGEMENT OF AN SCR CATALYST BY MEANS OF THE PERIODIC REGENERATION OF A PARTICLE FILTER

(30) Priorité: 12.01.2012 FR 1250305
(43) Date de publication de la demande: 19.11.2014
(73) Titulaire: Renault S.A.S., 92100 Boulogne-Billancourt (FR)
(72) Inventeur: LE-MORVAN, Pierre-Yves, F-92370 Chaville (FR); RAMSEYER, Aurelien, F-92100 Boulogne-Billancourt (FR); DI-PENTA, Damiano, F-75012 Paris (FR)
(86) Numéro de dépôt international: PCT/FR2013/050062
(87) Numéro de publication internationale: WO 2013/104872

(56) Documents cités:
- DE-A1-102009 008 165
- DE-A1-102009 042 386
- US-A1- 2008 066 451
- US-A1- 2011 083 428

## Description

### Domaine technique de l'invention

L'invention concerne le domaine du post-traitement des gaz d'échappement au moyen d'un catalyseur SCR et d'un filtre à particules.

L'invention a pour objet plus particulièrement un procédé de gestion d'un groupe motopropulseur de véhicule automobile, comportant un moteur à combustion interne, une ligne d'échappement des gaz d'échappement émis par le moteur et où sont implantés un filtre à particules, un catalyseur SCR de réduction catalytique sélective d'oxydes d'azote et un dispositif d'injection d'un agent réducteur adapté au fonctionnement du catalyseur SCR.

### État de la technique

Les moteurs à combustion interne génèrent principalement des oxydes d'azote (NOx, principalement NO et NO2), du monoxyde de carbone (CO), des hydrocarbures (HC) et des particules. Des systèmes de post-traitement des gaz d'échappement de plus en plus complexes sont disposés dans les lignes d'échappement des moteurs à mélange pauvre pour répondre à la baisse des seuils admis pour les émissions de gaz polluants des véhicules automobiles.

Une manière de réduire ces émissions polluantes est de disposer un catalyseur SCR assurant une réduction catalytique sélective d'oxydes d'azote au moyen d'un réducteur adapté(comme par exemple de l'ammoniac NH3). Un tel catalyseur SCR fonctionne par injection d'un agent réducteur dans la ligne d'échappement en amont du catalyseur SCR, apte à former le réducteur après réaction chimique.

Le groupe motopropulseur nécessite en général l'adjonction d'un réservoir contenant l'agent réducteur, d'un dispositif d'injection spécifique en amont du catalyseur SCR et d'un moyen permettant de mélanger l'agent réducteur avec les gaz d'échappement afin d'homogénéiser le mélange entrant dans le catalyseur SCR pour améliorer le traitement des oxydes d'azote.

Durant le fonctionnement, en fonction de différents paramètres dynamiques tels que le mode d'alimentation de moteur (type d'injection de carburant, richesse du mélange, débit d'air d'alimentation etc...) et le régime moteur et le couple mécanique délivré, il arrive fréquemment que la température des gaz dans la ligne d'échappement reste peu élevée durant des périodes prolongées. Lorsque le groupe motopropulseur inclut un catalyseur SCR, il peut en résulter différents problèmes présentés ci-dessous.

Si la température de la ligne d'échappement au niveau du catalyseur SCR est trop faible (inférieure à 200°C environ), l'agent réducteur injecté peut se cristalliser dans la ligne d'échappement et/ou dans l'injecteur d'agent réducteur lui-même, voir par example la demande de brevet allemande DE 10 2009 008 165A1. Ceci a pour conséquence d'abord un encrassement de l'injecteur par les cristaux. Pour une même consigne de quantité d'agent réducteur à injecter, cela entraîne une diminution de la quantité de réducteur réellement injectée. Ceci va donc conduire à une baisse de l'efficacité de traitement des oxydes d'azote par le catalyseur SCR. D'autre part, des émissions sporadiques de réducteur à l'échappement peuvent apparaitre : lorsque la température des gaz augmente et passe au-dessus de la température de vaporisation des cristaux d'agent réducteur, la quantité des émissions d'agent réducteur résultant de la vaporisation des cristaux peut parfois être trop importante pour être stockée efficacement par le catalyseur SCR. Ainsi, une partie de l'agent réducteur ou du réducteur passe alors à travers le catalyseur SCR et sort à l'échappement, ce qui est souvent malodorant et nocif à forte dose.

Par ailleurs, lorsque la température des gaz d'échappement en entrée du catalyseur SCR est trop faible, les hydrocarbures imbrûlés de formule HC arrivant en entrée du catalyseur SCR se stockent sur le catalyseur SCR et limitent son efficacité de traitement des oxydes d'azote. En effet, ces hydrocarbures stockés sur le catalyseur SCR, émis par le moteur ou envoyés par un injecteur additionnel placé dans la ligne d'échappement, ne sont oxydés qu'au-dessus de 350°C environ et n'ont pas été traités par les éventuels systèmes de post-traitement positionnés en amont du catalyseur SCR.

Aujourd'hui, ces problèmes ne sont pas résolus en tant que tels et restent au contraire subis et partiellement contournés par le fait que la ligne d'échappement est chauffée le plus rapidement possible pour éviter la formation de cristaux et l'émission importante d'hydrocarbures imbrûlés, et par le fait que l'injection d'agent réducteur est limitée voire arrêtée en dessous d'un seuil de température en entrée du catalyseur SCR.

### Objet de l'invention

Le but de la présente invention est de proposer une solution de post-traitement des gaz d'échappement à base de catalyseur SCR qui remédie aux inconvénients listés ci-dessus.

Notamment, un objet de l'invention est de fournir un procédé de gestion d'un groupe motopropulseur qui permette, de manière simple et peu onéreuse, de limiter la quantité de cristaux d'agent réducteur dans la ligne d'échappement et dans le dispositif d'injecteur et la quantité d'hydrocarbures imbrûlés stockés sur le catalyseur SCR.

Un premier aspect de l'invention concerne un procédé de gestion d'un groupe motopropulseur de véhicule automobile, comportant un moteur à combustion interne, une ligne d'échappement des gaz d'échappement émis par le moteur et où sont implantés un filtre à particules, un catalyseur de réduction catalytique sélective d'oxydes d'azote et un dispositif d'injection d'un agent réducteur adapté au fonctionnement du catalyseur. Le procédé de gestion comprend une procédé de régulation d'une quantité de cristaux à base d'agent réducteur dans la ligne d'échappement et/ou dans le dispositif d'injection, et d'une quantité d'hydrocarbures contenus dans le catalyseur, le procédé de régulation comprenant des étapes périodiques de régénération du filtre à particules, déclenchées pour chacune d'elles en fonction de critères indépendants de la quantité de suies contenue du filtre à particules.

Les étapes de régénération du filtre à particules peuvent être déclenchées périodiquement à partir d'une fréquence prédéterminée sur la base du temps et/ou de la distance de fonctionnement du véhicule automobile.

Le procédé de régulation peut comprendre au moins une étape de détermination de la quantité de cristaux à base d'agent réducteur dans la ligne d'échappement et/ou dans le dispositif d'injection, une étape de régénération du filtre à particules étant ensuite mise en oeuvre lorsqu'une condition de déclenchement prenant en compte la quantité de cristaux déterminée à l'étape de détermination est vérifiée.

Une étape de régénération du filtre à particules peut être mise en oeuvre dans le cas où la quantité de cristaux déterminée à l'étape de détermination est supérieure à un seuil prédéterminé.

L'étape de détermination de la quantité de cristaux peut comprendre l'exécution d'un algorithme d'estimation fournissant une évaluation de cette quantité à partir de paramètres choisis parmi au moins la température des gaz d'échappement en entrée du catalyseur, le débit des gaz d'échappement, la quantité d'agent réducteur injectée par le dispositif d'injection.

La quantité de cristaux déterminée à une étape de détermination précédente peut être remise à zéro lorsque la température des gaz d'échappement en entrée du catalyseur est supérieure à un seuil prédéterminé.

Le procédé de régulation peut comprendre au moins une étape de détermination de la quantité d'hydrocarbures contenus dans le catalyseur, une étape de régénération du filtre à particules étant ensuite mise en oeuvre lorsqu'une condition de déclenchement prenant en compte la quantité d'hydrocarbures déterminée à l'étape de détermination est vérifiée.

Une étape de régénération du filtre à particules peut être mise en oeuvre dans le cas où la quantité d'hydrocarbures déterminée à l'étape de détermination est supérieure à un seuil prédéterminé.

L'étape de détermination de la quantité d'hydrocarbures peut comprendre l'exécution d'un algorithme d'estimation fournissant une évaluation de cette quantité à partir de modèles de calcul choisis parmi au moins un modèle de calcul des émissions d'hydrocarbures en sortie du moteur, un modèle de calcul de conversion des hydrocarbures par un catalyseur d'oxydation implanté sur la ligne d'échappement en amont du catalyseur, un modèle de calcul de chargement des hydrocarbures dans le catalyseur. Le modèle de calcul des émissions d'hydrocarbures en sortie du moteur peut prendre en compte des paramètres choisis parmi au moins le régime du moteur, le couple mécanique délivré par le moteur, la température d'eau de refroidissement du moteur. Le modèle de calcul de conversion des hydrocarbures par le catalyseur d'oxydation peut prendre en compte des paramètres choisis parmi au moins la température des gaz d'échappement en entrée du catalyseur d'oxydation, le débit des gaz d'échappement.

La quantité d'hydrocarbures déterminée à une étape de détermination précédente peut être remise à zéro notamment lorsque la température des gaz d'échappement en entrée du catalyseur est supérieure à un seuil prédéterminé.

Une étape de régénération du filtre à particules peut être mise en oeuvre lorsque l'une au moins des deux conditions de déclenchement prenant en compte respectivement la quantité de cristaux déterminée et la quantité d'hydrocarbures déterminée est vérifiée.

Un deuxième aspect de l'invention concerne un groupe motopropulseur de véhicule automobile, comportant un moteur à combustion interne, une ligne d'échappement des gaz d'échappement émis par le moteur et où sont implantés un filtre à particules, un catalyseur de réduction catalytique sélective d'oxydes d'azote et un dispositif d'injection d'agent réducteur adapté au fonctionnement du catalyseur. Le groupe comprend une unité de commande électronique qui met en oeuvre de manière automatique un tel procédé de gestion.

Un troisième aspect de l'invention concerne un véhicule automobile qui comprend un tel groupe motopropulseur.

Un quatrième aspect de l'invention concerne un programme informatique comprenant un moyen de codes de programme informatique adapté à la réalisation des étapes d'un tel procédé lorsque le programme est exécuté sur un calculateur de l'unité de commande.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 représentent schématiquement un exemple de groupe motopropulseur selon l'invention,
- la figure 3 représente les étapes successives d'un exemple de procédé de gestion selon l'invention,
- la figure 4 est un schéma bloc illustrant schématiquement un exemple de détermination de la quantité d'hydrocarbures,
- et la figure 5 est un schéma bloc illustrant schématiquement un exemple de détermination de la quantité de cristaux d'agent réducteur.

### Description de modes préférentiels de l'invention

Il est donc proposé dans ce document de déclencher activement des régénérations d'un filtre à particules non plus uniquement comme dans l'art antérieur en fonction des besoins propres de régénération de la quantité de suies présente dans le filtre à particules, mais périodiquement à partir de critères de déclenchement indépendants de cette quantité de suies dans le filtre à particules, ces critères étant adaptés de sorte à mener de manière contrôlée :
- une régulation de la quantité de cristaux d'agent réducteur dans la ligne d'échappement et dans son dispositif d'injection, par exemple en dessous d'un seuil donné,
- et une régulation de la quantité d'hydrocarbures imbrûlés stockés sur le catalyseur SCR, par exemple en dessous d'un seuil donné.

La description sera réalisée en application à un réducteur constitué par le cas particulier de l'ammoniac NH3 formé par exemple à partir d'un agent réducteur à base d'urée telle que le produit vendu sous la dénomination commerciale AdBlue® correspondant à la solution AUS32 à 32,5% d'urée. Tout autre type d'agent réducteur adapté au fonctionnement du catalyseur SCR peut être envisagé, en fonction de la nature du catalyseur SCR.

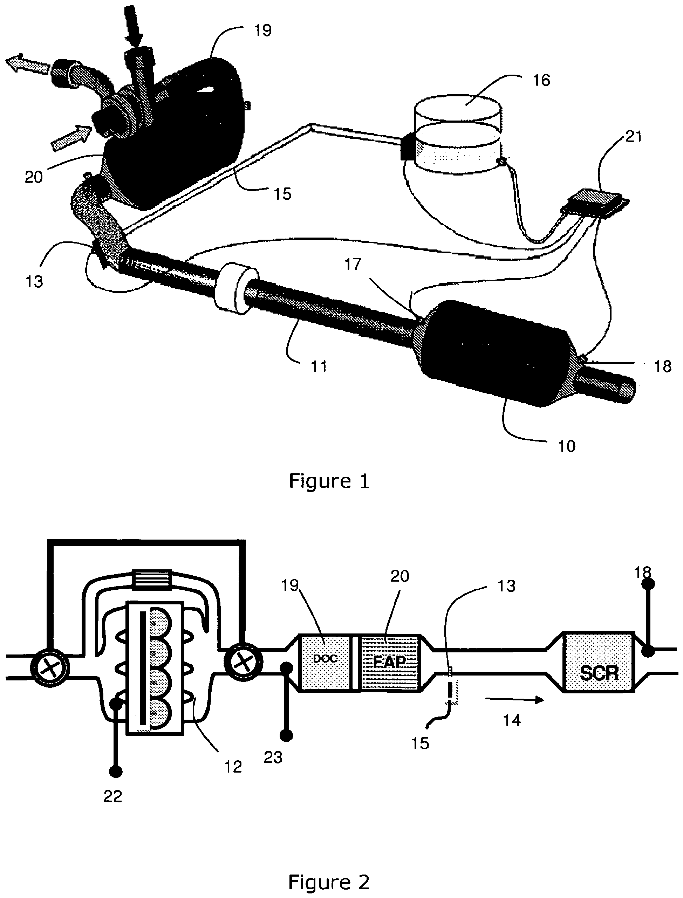

Les figures 1 et 2 représentent un groupe motopropulseur de véhicule automobile, avec un catalyseur SCR repéré 10 implanté sur une ligne d'échappement 11 pour les gaz émis par un moteur à combustion interne 12. Un dispositif d'injection 13 est implanté sur la ligne 11 en amont du catalyseur 10, suivant le sens d'écoulement 14 des gaz le long de la ligne 11. Le dispositif d'injection 13 est alimenté par une entrée 15 en une solution aqueuse d'urée, l'urée ayant la propriété de se décomposer en ammoniac NH3 à haute température, de sorte à pouvoir injecter dans la ligne d'échappement 11 la quantité MA d'agent réducteur exigée par le catalyseur 10. L'entrée 15 est alimentée par un réservoir 16 contenant de l'agent réducteur. Ce groupe comprend de plus plusieurs capteurs dont un capteur de température 17 configuré pour déterminer (par mesure ou par évaluation) la température T1 des gaz en entrée du catalyseur SCR, et un capteur d'oxydes d'azote 18 en amont et/ou en aval du catalyseur SCR 10. De préférence, ce capteur 18 peut avoir la propriété de mesurer aussi la concentration d'ammoniac NH3 dans les gaz d'échappement en aval du catalyseur SCR 10. Un capteur 22 donne accès à la température T2 d'eau de refroidissement du moteur 12. Un autre capteur 23 fournit l'information relative à la température T3 des gaz d'échappement en entrée du catalyseur d'oxydation 19. Enfin, le groupe motopropulseur comprend un catalyseur d'oxydation (DOC) repéré 19 et un filtre à particules (FAP) repéré 20 implantés sur la ligne d'échappement 11 en amont du catalyseur SCR 10, permettant de piéger d'autres éléments polluants des gaz d'échappement, notamment des suies ou particules dans le cas du filtre 20.

Dans le cas où l'agent réducteur à base d'urée tel que l'AdBlue® est injecté dans la voie d'échappement 11 en amont du catalyseur SCR, cet agent en s'évaporant se transforme en urée et en eau. La décomposition ultérieure de l'urée en ammoniac et en dioxyde de carbone s'effectue en deux étapes de thermolyse et d'hydrolyse. Puis l'ammoniac et les oxydes d'azote NOx interagissent dans le catalyseur SCR sous forme de réaction d'oxydoréduction, pour réduire toute ou partie des oxydes d'azote NOx. L'injection d'ammoniac dans les voies d'échappement 11 permet ainsi de réduire les oxydes d'azote NOx des gaz d'échappement par une réaction favorisée par le catalyseur SCR.

Le groupe motopropulseur comprend, de plus, une unité de commande électronique 21, composée d'éléments matériel (hardware) et/ou logiciel (software), qui se présente généralement sous la forme d'un ordinateur de bord. Cette unité 21 reçoit les données des mesures des différents capteurs. A partir de ces données et/ou de modèles de calcul (cartographies, abaques, etc...) mémorisés, d'algorithmes d'estimation mémorisés, l'unité 21 met en oeuvre, grâce à un programme informatique comprenant un moyen de codes de programme informatique adapté à sa réalisation, un procédé de gestion du groupe motopropulseur, décrit ci-après. Notamment, l'unité 21 commande des régénérations périodiques du filtre à particules 20, à des fins de régulation qui seront précisées plus loin, ces régénérations étant déclenchées activement de manière totalement indépendante des régénérations classiques dues aux besoins réels du filtre 20 pour éliminer tout ou partie des suies lorsque leur masse dépassent un seuil donné. Autrement dit, il est proposé ici de déclencher périodiquement des étapes de régénération du filtre à particules 20, en fonction de critères de déclenchement qui ne tiennent pas compte de la quantité de suies contenue du filtre à particules 20.

Classiquement, une régénération du filtre à particules 20 n'est déclenchée que lorsque les suies qu'il contient présentent une quantité supérieure à un seuil prédéterminé. Dans le cadre de la présente invention, des régénérations supplémentaires sont exécutées périodiquement sans que la condition ci-dessus ne soit vérifiée. Ces régénérations supplémentaires sont donc déclenchées activement par l'unité 21 même à des instants où la quantité des suies contenue par le filtre à particules 20 n'est pas supérieure audit seuil prédéterminé.

Pour parvenir à une régénération (classique ou supplémentaire) du filtre à particules 20, il est connu d'augmenter temporairement la température des gaz dans la ligne d'échappement 11, en commandant volontairement une modification adaptée de l'injection (quantité, type) du carburant dans le moteur à combustion interne 12 et/ou une modification adaptée de l'alimentation en gaz d'admission dans le moteur à combustion interne 12 et/ou une modification adaptée du taux de gaz recyclés. L'invention ne porte pas directement sur le principe connu d'une régénération d'un filtre à particules 20 (qui ne sera d'ailleurs pas plus détaillé), mais sur la manière avantageuse de la déclencher activement à partir de certains critères particuliers indépendants de la quantité de suies contenue dans le filtre à particules 21.

La température des gaz atteinte au cours d'une régénération du filtre à particules 20 est supérieure à la température de vaporisation des cristaux d'agent réducteur. Ainsi, dans une ligne d'échappement 11 équipée d'un filtre à particules 20 prévu pour se régénérer par augmentation de la température des gaz, les cristaux et les hydrocarbures imbrûlés sont régulièrement éliminés au moins partiellement grâce à la mise en oeuvre des régénérations classiques déclenchées à chaque fois que la quantité des suies est supérieure au seuil prédéterminé. Mais dans ce cas, les quantités de cristaux et d'hydrocarbures dépendent directement de la durée des périodes entre deux régénérations successives déclenchées à partir des besoins réels en régénérations du filtre à particules 20, i.e. à partir de critères basés sur la quantité de suies du filtre 20. Des quantités aléatoires importantes de cristaux et d'hydrocarbures sont donc susceptibles de se former librement en cas de période prolongée entre deux régénérations successives, ce qui n'est pas satisfaisant pour l'efficacité du catalyseur SCR.

C'est pour répondre à ces problématiques que selon une caractéristique essentielle, le procédé de gestion exécuté par l'unité 21 comprend un procédé de régulation d'une quantité MC de cristaux à base d'agent réducteur dans la ligne d'échappement 11 et/ou dans le dispositif d'injection 13, et d'une quantité MH d'hydrocarbures imbrûlés contenus dans le catalyseur SCR. Ce procédé de régulation comprend avantageusement des étapes périodiques de régénération du filtre à particules 20, déclenchées pour chacune d'elles en fonction de critères de déclenchement indépendants de la quantité de suies contenue du filtre à particules 20. Ces étapes périodiques de régénération du filtre à particules 20 sont donc déclenchées, pour chacune d'elles, indépendamment des besoins réels en régénération du filtre à particules 20. La mise en oeuvre d'une telle régulation de la quantité MC de cristaux d'agent réducteur et de la quantité MH d'hydrocarbures permet, notamment en fonction des conditions de déclenchement des régénérations, de s'affranchir de tout risque de voir s'accumuler librement des quantités aléatoires importantes de cristaux et d'hydrocarbures.

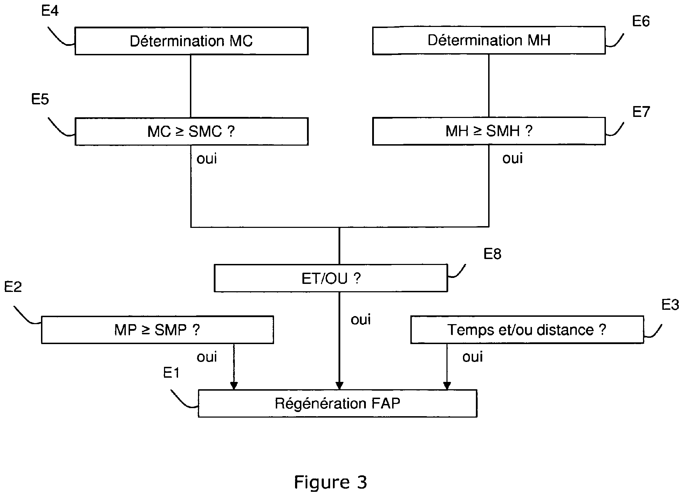

La figure 3 représente les étapes successives d'un exemple de procédé de gestion selon l'invention. Le procédé mis en oeuvre automatiquement par l'unité de commande électrique 21 de sorte à gérer globalement le groupe motopropulseur, comprend donc au moins une étape E1 au cours de laquelle une régénération du filtre à particules 20 est exécutée. Les étapes E1 de régénération ont pour vocation à être mises en oeuvre de manière périodique et l'invention porte sur des conditions innovantes de déclenchement des étapes E1 de régénération.

De manière connue, le procédé de gestion peut comprendre au moins une étape E2 consistant à déterminer s'il existe un besoin réel de régénération du filtre à particules 5. Pour cela, le procédé vérifie essentiellement si la quantité (masse) MP de suies contenues dans le filtre à particules 5 dépasse une valeur seuil SMP prédéfinie. Dans l'affirmative, c'est-à-dire en cas de détection d'un besoin réel d'une régénération selon l'étape E1, la régénération du filtre à particules 5 est déclenchée et le procédé passe à l'étape E1. Il s'agit des conditions classiques de déclenchement des régénérations du filtre à particules 20, basées sur les besoins réels en régénération, qui tiennent compte de la quantité MP de suies dans le filtre 20. Ces conditions permettent d'éviter que cette quantité MP ne soit trop élevée, pour s'affranchir d'un risque d'une contre-pression importante à l'échappement du moteur 12, ainsi que d'une augmentation de la pression différentielle aux bornes du filtre à particules 20, ce qui diminuerait considérablement les performances du moteur 12.

Pour permettre de réguler les quantités MC de cristaux et MH des hydrocarbures imbrûlés, le procédé de gestion prévoit ainsi un procédé de régulation avec des critères de déclenchement supplémentaires de l'étape E1 de régénération. Ces critères supplémentaires de déclenchement sont formés par les étapes E3 à E8 décrites plus loin, lesquelles permettent de déclencher une étape E1 de régénération, ou plusieurs étapes E1 de régénérations périodiques, indépendamment des besoins en régénération du filtre à particules 20 quant à eux examinés, simultanément, dans l'étape E2. Ces critères supplémentaires sont indépendants de la quantité MP de suies contenue dans le filtre à particules 20.

Dans une première possibilité de tel critère supplémentaire, présentant l'avantage de sa simplicité, les étapes E1 de régénération du filtre à particules 20 sont déclenchées périodiquement à partir d'une fréquence temporelle et/ou kilométrique prédéterminée, sur la base respectivement du temps et/ou de la distance de fonctionnement du véhicule automobile. Le procédé de régulation que comprend le procédé de gestion comporte ainsi au moins une étape E3, réalisée en continu ou périodiquement, dans laquelle l'unité de commande 21 examine si le temps de fonctionnement du véhicule est supérieur à un seuil temporel donné (directement lié à la fréquence temporelle recherchée) et/ou si la distance parcourue par le véhicule est supérieure à un seuil kilométrique donné (directement lié à la fréquence kilométrique recherchée). Si au moins l'une des deux conditions est vérifiée, le procédé de gestion passe à l'étape E1 de régénération. Cela permet la définition d'un temps ou d'un kilométrage forfaitaire de passage en mode de régénération du filtre à particules 20, qui couvre les besoins de réduction des cristaux et des hydrocarbures. Par exemple, une étape E1 de régénération est déclenchée forfaitairement tous les 300km ou toutes les 5h de fonctionnement.

Dans une deuxième possibilité de tel critère supplémentaire, présentant l'avantage de sa précision, les étapes E1 de régénération du filtre à particules 20 sont déclenchées périodiquement après avoir, au préalable et pour chacune, déterminé (par évaluation, mesure, etc...) la quantité MC de cristaux d'agent réducteur et/ou la quantité MH d'hydrocarbures imbrûlés, puis après avoir évalué, à partir de ces quantités MC et MH déterminées, s'il existe un besoin de déclencher une étape E1 notamment en fonction de la stratégie de régulation recherchée de ces quantités MC et MH.

Le procédé de régulation que comprend le procédé de gestion comporte ainsi au moins une étape E4, réalisée en continu ou périodiquement, dans laquelle l'unité de commande 21 détermine la quantité MC de cristaux à base d'agent réducteur dans la ligne d'échappement 11 et/ou dans le dispositif d'injection 13 et au moins une étape E6, réalisée en continu ou périodiquement, dans laquelle l'unité de commande 21 détermine la quantité MH d'hydrocarbures contenus dans le catalyseur SCR.

Une étape E1 de régénération du filtre à particules 20 peut être mise en oeuvre lorsqu'une condition de déclenchement prenant en compte la quantité MC de cristaux déterminée à l'étape E4 de détermination de MC est vérifiée. Une étape E1 de régénération du filtre à particules 20 est mise en oeuvre par exemple dans le cas où la quantité MC de cristaux déterminée à l'étape E4 de détermination est supérieure à un seuil SMC prédéterminé. L'unité de commande 21 examine si cette condition de déclenchement est vérifiée ou non, au cours d'une étape E5 dans laquelle il est examiné si la quantité MC de cristaux déterminée à l'étape E4 est supérieure ou égale au seuil SMC. Dans l'affirmative, le procédé de gestion passe à une étape E8 d'attente, facultative.

Une étape E1 de régénération du filtre à particules 20 peut être mise en oeuvre également, dans le même temps, lorsqu'une condition de déclenchement prenant en compte la quantité MH d'hydrocarbures déterminée à l'étape E6 de détermination est vérifiée. Une étape E1 de régénération du filtre à particules 20 est mise en oeuvre par exemple dans le cas où la quantité MH d'hydrocarbures déterminée à l'étape E6 de détermination est supérieure à un seuil SMH prédéterminé. L'unité de commande 21 examine si la condition de déclenchement est vérifiée ou non, au cours d'une étape E7 dans laquelle il est examiné si la quantité MH d'hydrocarbures déterminée à l'étape E6 est supérieure ou égale au seuil SMH. Dans l'affirmative, le procédé de gestion passe aussi à une étape E8 d'attente, facultative.

Dans un mode de réalisation particulier évitant des régénérations trop fréquentes malgré le but de l'invention, la vérification à l'une des étapes E5 et E7 d'une seule condition de déclenchement prenant en compte soit la quantité MC de cristaux déterminée, soit la quantité MH d'hydrocarbures, ne suffit pas à déclencher une étape E1 de régénération du filtre à particules 20. Au contraire, une étape E1 de régénération du filtre à particules 20 n'est déclenchée que lorsque les deux conditions de déclenchement prenant en compte respectivement la quantité MC de cristaux déterminée et la quantité MH d'hydrocarbures déterminée sont vérifiées. C'est pour cette raison que l'étape E8 d'attente correspond à une étape au cours de laquelle l'unité de commande 21, avant de mettre en oeuvre une étape E1 de régénération et bien que l'une des conditions de déclenchement ait potentiellement déjà été vérifiée, attend que les deux conditions de déclenchement aient été vérifiées.

Toutefois, dans un autre mode de réalisation, il suffit que soit vérifiée une seule condition de déclenchement prenant en compte soit la quantité MC de cristaux déterminée, soit la quantité MH d'hydrocarbures, pour commander le déclenchement d'une étape E1 de régénération du filtre à particules 20. Le procédé de gestion peut alors passer directement d'une étape E5 à une étape E1 en passant par l'étape E8, indépendamment des étapes E6 et E7. Parallèlement et indépendamment, le procédé de gestion peut aussi passer directement d'une étape E7 à une étape E1 en passant par l'étape E8, indépendamment des étapes E4 et E5. Cette étape E8 est repérée « ET/OU », car le passage à l'étape E1 n'est réalisé qu'à la condition que les étapes E5 et E7 aient préalablement été vérifiées dans un mode particulier, ou bien si une seule des étapes E5 ou E7 a été vérifiée dans un autre mode particulier.

Il ressort de tout ce qui précède que les étapes E4 et E5 sont menées séparément des étapes E6 et E7, mais en parallèle de celles-ci.

Ces seuils SMH et SMC peuvent être adaptés en fonction des besoins spécifiques d'une application de véhicule.

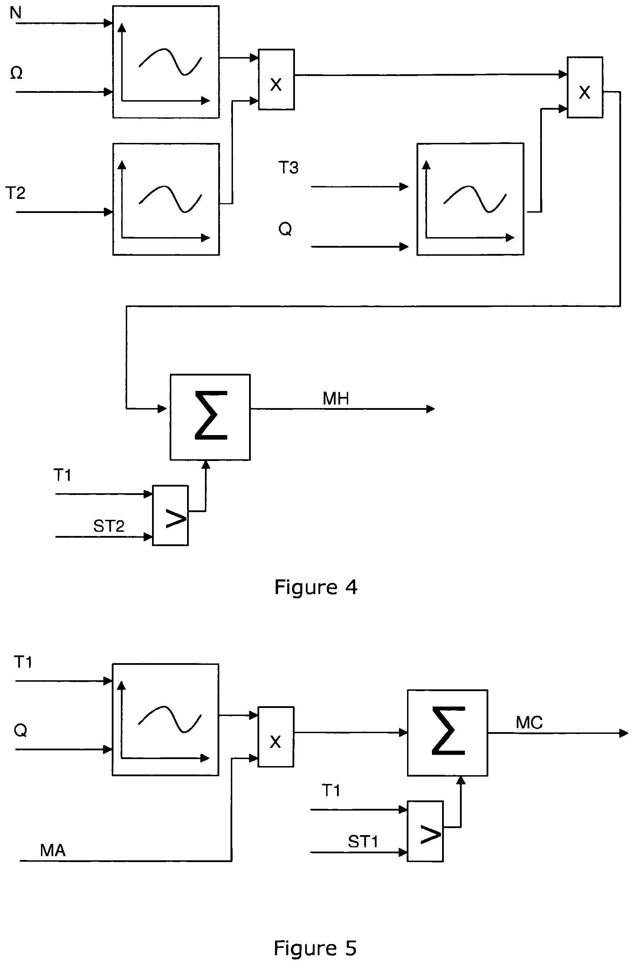

La figure 5 est un schéma bloc illustrant schématiquement un exemple de détermination de la quantité MC de cristaux d'agent réducteur exécutée à l'étape E4.

Une proportion de la quantité MA d'agent réducteur injectée se cristallise. Cette proportion varie en fonction du débit des gaz Q et de la température T1 en entrée du catalyseur SCR. L'étape E4 de détermination de la quantité MC de cristaux comprend ainsi avantageusement l'exécution d'un algorithme ou modèle d'estimation fournissant une évaluation de cette quantité MC à partir de paramètres choisis parmi au moins la température T1 des gaz d'échappement en entrée du catalyseur SCR, le débit Q des gaz d'échappement, et la quantité MA d'agent réducteur injectée par le dispositif d'injection 13. Le débit Q peut être obtenu par tout moyen, mesure ou évaluation. A titre d'exemple, la valeur de Q est estimée à partir du débit de gaz mesuré en entrée du moteur 12.

Il peut être prévu que la quantité MC de cristaux déterminée à une étape E4 de détermination précédente soit remise à zéro lorsque la température T1 des gaz d'échappement en entrée du catalyseur SCR est supérieure à un seuil ST1 prédéterminé. Dans ce cas, le procédé de gestion revient à l'étape E4 après la remise à zéro. A titre d'exemple, si la température T1 en entrée du catalyseur SCR dépasse le seuil ST1 (par exemple 200°C), alors la quantité MC de cristaux est remise à zéro. Le seuil ST1 peut être calibré de façon physique à partir de la température de vaporisation des cristaux.

La figure 4 est un schéma bloc illustrant schématiquement un exemple de détermination de la quantité MH d'hydrocarbures exécutée à l'étape E6.

La quantité MH d'hydrocarbures dépend des hydrocarbures émis par le moteur 12, puis de la facilité de chargement de ces hydrocarbures dans le catalyseur SCR. Elle peut dépendre aussi de la conversion des hydrocarbures par le catalyseur d'oxydation 19 lorsque la ligne d'échappement 11 en est équipée. C'est pourquoi l'étape E6 de détermination de la quantité MH d'hydrocarbures comprend avantageusement l'exécution d'un algorithme, ou modèle, d'estimation fournissant une évaluation de cette quantité MH à partir de modèles de calcul choisis parmi au moins un modèle de calcul des émissions d'hydrocarbures en sortie du moteur 12, un modèle de calcul de conversion des hydrocarbures par le catalyseur d'oxydation 19 implanté sur la ligne d'échappement 11 en amont du catalyseur SCR, et un modèle de calcul de chargement des hydrocarbures dans le catalyseur SCR.

Le modèle de calcul des émissions d'hydrocarbures en sortie du moteur 12 prend en compte des paramètres choisis parmi au moins le régime N du moteur 12, le couple mécanique Ω délivré par le moteur 12, la température T2 d'eau de refroidissement du moteur 12. L'ensemble (N, Ω) correspond au point de fonctionnement du moteur 12. Le modèle de calcul des émissions est par exemple constitué par une cartographie donnant les émissions en fonction de la température T2 d'eau de refroidissement, la cartographie dépendant du point de fonctionnement (N, Ω). Cette cartographie est remplie par identification à un banc moteur.

Le modèle de calcul de conversion des hydrocarbures par le catalyseur d'oxydation 19 prend en compte des paramètres choisis parmi au moins la température T3 des gaz d'échappement en entrée du catalyseur d'oxydation 19 et le débit Q des gaz d'échappement. Il peut s'agir d'une cartographie en fonction de T2 et de Q.

Il peut être prévu que la quantité MH d'hydrocarbures déterminée à une étape E6 de détermination précédente soit remise à zéro lorsque la température T1 des gaz d'échappement en entrée du catalyseur SCR est supérieure à un seuil ST2 prédéterminé. Dans ce cas, le procédé de gestion revient à l'étape E6 après la remise à zéro. A titre d'exemple, si la température T1 en entrée du catalyseur SCR dépasse le seuil ST2 (par exemple 200°C), alors la quantité MH d'hydrocarbures est remise à zéro. Le seuil ST2 peut être fixé en fonction d'essais de caractérisation. Le seuil ST2 peut être égal au seuil ST1, ou être différent de ce dernier.

Ces algorithmes et ces modèles de calcul peuvent être développés à partir d'équations physiques, de calculs empiriques, d'estimations « au pire cas », ou d'observateurs (estimation indirecte à partir d'un capteur).

## Revendications

1. Procédé de gestion d'un groupe motopropulseur de véhicule automobile, comportant un moteur à combustion interne (12), une ligne d'échappement (11) des gaz d'échappement émis par le moteur (12) et où sont implantés un filtre à particules (20), un catalyseur (SCR) de réduction catalytique sélective d'oxydes d'azote (NOx) et un dispositif d'injection (13) d'un agent réducteur adapté au fonctionnement du catalyseur (SCR), **caractérisé en ce que** le procédé de gestion comprend une procédé de régulation d'une quantité (MC) de cristaux à base d'agent réducteur dans la ligne d'échappement (11) et dans le dispositif d'injection (13), et d'une quantité (MH) d'hydrocarbures contenus dans le catalyseur (SCR), le procédé de régulation comprenant des étapes (E1) périodiques de régénération du filtre à particules (20), déclenchées pour chacune d'elles en fonction de critères indépendants de la quantité (MP) de suies contenue du filtre à particules (20).

2. Procédé de gestion selon la revendication 1, **caractérisé en ce que** les étapes (E1) de régénération du filtre à particules (20) sont déclenchées (E3) périodiquement à partir d'une fréquence prédéterminée sur la base du temps et/ou de la distance de fonctionnement du véhicule automobile.

3. Procédé de gestion selon l'une des revendications 1 et 2, **caractérisé en ce que** le procédé de régulation comprend au moins une étape (E4) de détermination de la quantité (MC) de cristaux à base d'agent réducteur dans la ligne d'échappement (11) et/ou dans le dispositif d'injection (13), une étape (E1) de régénération du filtre à particules (20) étant ensuite mise en oeuvre lorsqu'une condition de déclenchement prenant en compte la quantité (MC) de cristaux déterminée à l'étape (E4) de détermination est vérifiée.

4. Procédé de gestion selon la revendication 3, **caractérisé en ce qu'**une étape (E1) de régénération du filtre à particules (20) est mise en oeuvre dans le cas où la quantité (MC) de cristaux déterminée à l'étape (E4) de détermination est supérieure à un seuil (SMC) prédéterminé.

5. Procédé de gestion selon l'une des revendications 3 et 4, **caractérisé en ce que** l'étape (E4) de détermination de la quantité (MC) de cristaux comprend l'exécution d'un algorithme d'estimation fournissant une évaluation de cette quantité à partir de paramètres choisis parmi au moins la température (T1) des gaz d'échappement en entrée du catalyseur (SCR), le débit (Q) des gaz d'échappement, la quantité (MA) d'agent réducteur injectée par le dispositif d'injection (13).

6. Procédé de gestion selon l'une des revendications 3 à 5, **caractérisé en ce que** la quantité (MC) de cristaux déterminée à une étape (E4) de détermination précédente est remise à zéro lorsque la température (T1) des gaz d'échappement en entrée du catalyseur (SCR) est supérieure à un seuil (ST1) prédéterminé.

7. Procédé de gestion selon l'une des revendications 1 à 6, **caractérisé en ce que** le procédé de régulation comprend au moins une étape (E6) de détermination de la quantité (MH) d'hydrocarbures contenus dans le catalyseur (SCR), une étape (E1) de régénération du filtre à particules (20) étant ensuite mise en oeuvre lorsqu'une condition de déclenchement prenant en compte la quantité (MH) d'hydrocarbures déterminée à l'étape (E6) de détermination est vérifiée.

8. Procédé de gestion selon la revendication 7, **caractérisé en ce qu'**une étape (E1) de régénération du filtre à particules (20) est mise en oeuvre dans le cas où la quantité (MH) d'hydrocarbures déterminée à l'étape (E6) de détermination est supérieure à un seuil (SMH) prédéterminé.

9. Procédé de gestion selon l'une des revendications 7 et 8, **caractérisé en ce que** l'étape (E6) de détermination de la quantité (MH) d'hydrocarbures comprend l'exécution d'un algorithme d'estimation fournissant une évaluation de cette quantité à partir de modèles de calcul choisis parmi au moins un modèle de calcul des émissions d'hydrocarbures en sortie du moteur (12), un modèle de calcul de conversion des hydrocarbures par un catalyseur d'oxydation (19) implanté sur la ligne d'échappement (11) en amont du catalyseur (SCR), un modèle de calcul de chargement des hydrocarbures dans le catalyseur (SCR).

10. Procédé de gestion selon la revendication 9, **caractérisé en ce que** le modèle de calcul des émissions d'hydrocarbures en sortie du moteur (12) prend en compte des paramètres choisis parmi au moins le régime (N) du moteur (12), le couple mécanique (Ω) délivré par le moteur (12), la température (T2) d'eau de refroidissement du moteur (12).

11. Procédé de gestion selon l'une des revendications 9 et 10, **caractérisé en ce que** le modèle de calcul de conversion des hydrocarbures par le catalyseur d'oxydation (19) prend en compte des paramètres choisis parmi au moins la température (T3) des gaz d'échappement en entrée du catalyseur d'oxydation (19), le débit (Q) des gaz d'échappement.

12. Procédé de gestion selon l'une des revendications 7 à 11, **caractérisé en ce que** la quantité (MH) d'hydrocarbures déterminée à une étape (E6) de détermination précédente est remise à zéro lorsque la température (T1) des gaz d'échappement en entrée du catalyseur (SCR) est supérieure à un seuil (ST2) prédéterminé.

13. Procédé de gestion selon les revendications 3 et 7, **caractérisé en ce qu'**une étape (E1) de régénération du filtre à particules (20) est mise en oeuvre lorsque l'une au moins des deux conditions de déclenchement prenant en compte respectivement la quantité (MC) de cristaux déterminée et la quantité (MH) d'hydrocarbures déterminée est vérifiée.

14. Groupe motopropulseur de véhicule automobile, comportant un moteur à combustion interne (12), une ligne d'échappement (11) des gaz d'échappement émis par le moteur (12) et où sont implantés un filtre à particules (20), un catalyseur (SCR) de réduction catalytique sélective d'oxydes d'azote et un dispositif d'injection (13) d'agent réducteur adapté au fonctionnement du catalyseur (SCR), **caractérisé en ce qu'**il comprend une unité de commande électronique (21) qui met en oeuvre de manière automatique le procédé de gestion selon l'une quelconque des revendications précédentes.

15. Véhicule automobile **caractérisé en ce qu'**il comprend un groupe motopropulseur selon la revendication 14.

16. Programme informatique comprenant un moyen de codes de programme informatique adapté à la réalisation des étapes d'un procédé selon l'une des revendications 1 à 13, lorsque le programme est exécuté sur un calculateur de l'unité de commande (21).

## Patentansprüche

1. Verfahren zur Verwaltung eines Antriebsstrangs eines Kraftfahrzeugs, umfassend einen Verbrennungsmotor (12), eine Ablassleitung (11) der vom Motor (12) ausgestoßenen Auspuffgase, in der ein Partikelfilter (20), ein Katalysator (SCR) zur selektiven katalytischen Reduktion von Stickoxiden (NOx) und eine Einspritzvorrichtung (13) eines Reduktionsmittels, das an die Funktion des Katalysators (SCR) angepasst ist, eingesetzt sind, **dadurch gekennzeichnet, dass** das Verwaltungsverfahren ein Verfahren zur Regulierung einer Kristallmenge (MC) auf Basis eines Reduktionsmittels in der Ablassleitung (11) und in der Einspritzvorrichtung (13) und einer Menge an Kohlenwasserstoffen (MH), die in dem Katalysator (SCR) enthalten sind, umfasst, wobei das Regulierungsverfahren periodische Schritte (E1) der Regeneration des Partikelfilters (20) umfasst, die für jeden von ihnen in Abhängigkeit von unabhängigen Kriterien der im Partikelfilter (20) enthaltenen Rußmenge (MP) ausgelöst werden.

2. Verwaltungsverfahren nach Anspruch 1, **dadurch gekennzeichnet, dass** die Schritte (E1) der Regeneration des Partikelfilters (20) periodisch nach einer vorbestimmten Frequenz auf Basis der Funktionszeit und/oder der Funktionsdistanz des Kraftfahrzeugs ausgelöst werden (E3).

3. Verwaltungsverfahren nach einem der Ansprüche 1 und 2, **dadurch gekennzeichnet, dass** das Regulierungsverfahren mindestens einen Schritt (E4) der Bestimmung der Kristallmenge (MC) auf Basis eines Reduktionsmittels in der Ablassleitung (11) und/oder in der Einspritzvorrichtung (13) umfasst, wobei ein Schritt (E1) der Regeneration des Partikelfilters (20) sodann eingesetzt wird, wenn eine Auslösebedingung, die die in dem Bestimmungsschritt (E4) bestimmte Kristallmenge (MC) berücksichtigt, überprüft ist.

4. Verwaltungsverfahren nach Anspruch 3, **dadurch gekennzeichnet, dass** ein Schritt (E1) der Regeneration des Partikelfilters (20) eingesetzt wird, wenn die in dem Bestimmungsschritt (E4) bestimmte Kristallmenge (MC) größer als eine vorbestimmte Schwelle (SMC) ist.

5. Verwaltungsverfahren nach einem der Ansprüche 3 und 4, **dadurch gekennzeichnet, dass** der Schritt (E4) der Bestimmung der Kristallmenge (MC) die Ausführung eines Schätzalgorithmus umfasst, der eine Bewertung dieser Menge aus Parametern, die mindestens unter der Temperatur (T1) der Auspuffgase am Eingang des Katalysators (SCR), der Menge (Q) der Auspuffgase, der Menge (MA) an von der Einspritzvorrichtung (13) eingespritztem Reduktionsmittel ausgewählt sind, liefert.

6. Verwaltungsverfahren nach einem der Ansprüche 3 bis 5, **dadurch gekennzeichnet, dass** die in einem vorhergehenden Bestimmungsschritt (E4) bestimmte Kristallmenge (MC) auf Null gesetzt wird, wenn die Temperatur (T1) der Auspuffgase am Eingang des Katalysators (SCR) höher als eine vorbestimmte Schwelle (ST1) ist.

7. Verwaltungsverfahren nach einem der Ansprüche 1 bis 6, **dadurch gekennzeichnet, dass** das Regulierungsverfahren mindestens einen Schritt (E6) der Bestimmung der Menge an Kohlenwasserstoffen (MH), die in dem Katalysator (SCR) enthalten sind, umfasst, wobei sodann ein Schritt (E1) der Regeneration des Partikelfilters (20) eingesetzt wird, wenn eine Auslösebedingung, die die in dem Bestimmungsschritt (E6) bestimmte Menge an Kohlenwasserstoffen (MH) berücksichtigt, überprüft ist.

8. Verwaltungsverfahren nach Anspruch 7, **dadurch gekennzeichnet, dass** ein Schritt (E1) der Regeneration des Partikelfilters (20) eingesetzt wird, wenn die in dem Bestimmungsschritt (E6) bestimmte Menge an Kohlenwasserstoffen (MH) größer als eine vorbestimmte Schwelle (SMH) ist.

9. Verwaltungsverfahren nach einem der Ansprüche 7 und 8, **dadurch gekennzeichnet, dass** der Schritt (E6) der Bestimmung der Menge an Kohlenwasserstoffen (MH) die Ausführung eines Schätzalgorithmus umfasst, der eine Bewertung dieser Menge auf Basis von Berechnungsmodellen liefert, die unter mindestens einem Modell zur Berechnung der Kohlenwasserstoffemissionen am Ausgang des Motors (12), einem Modell zur Berechnung der Kohlenwasserstoffumwandlung durch einen Oxydations-Katalysator (19), der auf der Ablassleitung (11) stromaufwärts zum Katalysator (SCR) eingebaut ist, einem Modell zur Berechnung der Kohlenwasserstoffladung im Katalysator (SCR) ausgewählt sind.

10. Verwaltungsverfahren nach Anspruch 9, **dadurch gekennzeichnet, dass** das Modell zur Berechnung der Kohlenwasserstoffemissionen am Ausgang des Motors (12) Parameter berücksichtigt, die unter mindestens der Drehzahl (N) des Motors (12), dem vom Motor (12) gelieferten mechanischen Drehmoment (Ω), der Kühlwassertemperatur (T2) des Motors (12) ausgewählt sind.

11. Verwaltungsverfahren nach einem der Ansprüche 9 und 10, **dadurch gekennzeichnet, dass** das Modell zur Berechnung der Kohlenwasserstoffumwandlung durch den Oxydations-Katalysator (19) Parameter berücksichtigt, die mindestens unter der Temperatur (T3) der Auspuffgase am Eingang des Oxydations-Katalysators (19), der Menge (Q) der Auspuffgase ausgewählt sind.

12. Verwaltungsverfahren nach einem der Ansprüche 7 bis 11, **dadurch gekennzeichnet, dass** die in einem vorhergehenden Bestimmungsschritt (E6) bestimmte Menge an Kohlenwasserstoffen (MH) auf Null gesetzt wird, wenn die Temperatur (T1) der Auspuffgase am Eingang des Katalysators (SCR) höher als eine vorbestimmte Schwelle (ST2) ist.

13. Verwaltungsverfahren nach den Ansprüchen 3 und 7, **dadurch gekennzeichnet, dass** ein Schritt (E1) der Regeneration des Partikelfilters (20) eingesetzt wird, wenn mindestens eine der beiden Auslösebedingungen, die die bestimmte Kristallmenge (MC) bzw. die bestimmte Menge an Kohlenwasserstoffen (MH) berücksichtigt, überprüft ist.

14. Antriebsstrang eines Kraftfahrzeugs, umfassend einen Verbrennungsmotor (12), eine Ablassleitung (11) der vom Motor (12) ausgestoßenen Auspuffgase, in der ein Partikelfilter (20), ein Katalysator (SCR) zur selektiven katalytischen Reduktion von Stickoxiden und eine Einspritzvorrichtung (13) eines Reduktionsmittels, das an die Funktion des Katalysators (SCR) angepasst ist, eingesetzt sind, **dadurch gekennzeichnet, dass** er eine elektronische Steuereinheit (21) umfasst, die automatisch das Verwaltungsverfahren nach einem der vorhergehenden Ansprüche einsetzt.

15. Kraftfahrzeug, **dadurch gekennzeichnet, dass** es einen Antriebsstrang nach Anspruch 14 umfasst.

16. Computerprogramm, umfassend ein Computerprogrammcodemittel, das an die Ausführung der Schritte eines Verfahrens nach einem der Ansprüche 1 bis 13 angepasst ist, wenn das Programm auf einem Rechner der Steuereinheit (21) ausgeführt wird.

## Claims

1. Method for managing a motor vehicle propulsion unit, comprising an internal combustion engine (12), an exhaust line (11) for the exhaust gases emitted by the engine (12) and in which a particle filter (20), a catalytic converter (SCR) for the selective catalytic reduction of nitrogen oxides (NOx) and a device (13) for injecting a reducing agent suited to the operation of the catalytic converter (SCR) are installed, **characterized in that** the management method comprises a method for regulating a quantity (MC) of reducing-agent-based crystals in the exhaust line (11) and in the injection device (13) and for regulating a quantity (MH) of hydrocarbons contained in the catalytic converter (SCR), the regulating method comprising periodic steps (E1) of regenerating the particle filter (20), which steps are each triggered on the basis of criteria independent of the quantity (MP) of soot contained in the particle filter (20).

2. Management method according to Claim 1, **characterized in that** the steps (E1) of regenerating the particle filter (20) are triggered (E3) periodically upwards of a predetermined frequency based on the motor vehicle running time and/or running distance.

3. Management method according to either of Claims 1 and 2, **characterized in that** the regulating method comprises at least one step (E4) of determining the quantity (MC) of reducing-agent-based crystals in the exhaust line (11) and/or in the injection device (13), a step (E1) of regenerating the particle filter (20) then being carried out when a trigger condition that takes into consideration the quantity (MC) of crystals as determined in the determining step (E4) is met.

4. Management method according to Claim 3, **characterized in that** a step (E1) of regenerating the particle filter (20) is carried out in the case where the quantity (MC) of crystals as determined in the determining step (E4) is above a predetermined threshold (SMC).

5. Management method according to either of Claims 3 and 4, **characterized in that** the step (E4) of determining the quantity (MC) of crystals involves running an estimation algorithm that supplies an evaluation of this quantity on the basis of parameters chosen from at least the temperature (T1) of the exhaust gases entering the catalytic converter (SCR), the flow rate (Q) of the exhaust gases, the quantity (MA) of reducing agent injected by the injection device (13).

6. Management method according to one of Claims 3 to 5, **characterized in that** the quantity (MC) of crystals as determined at a previous determining step (E4) is reset to zero when the temperature (T1) of the exhaust gases entering the catalytic converter (SCR) is above a predetermined threshold (ST1).

7. Management method according to one of Claims 1 to 6, **characterized in that** the regulating method comprises at least one step (E6) of determining the quantity (MH) of hydrocarbons contained in the catalytic converter (SCR), a step (E1) of regenerating the particle filter (20) then being carried out when a trigger condition that takes into consideration the quantity (MH) of hydrocarbons as determined in the determining step (E6) is met.

8. Management method according to Claim 7, **characterized in that** a step (E1) of regenerating the particle filter (20) is carried out in the case where the quantity (MH) of hydrocarbons as determined in the determining step (E6) is above a predetermined threshold (SMH).

9. Management method according to either of Claims 7 and 8, **characterized in that** the step (E6) of determining the quantity (MH) of hydrocarbons involves running an estimation algorithm that supplies an evaluation of this quantity on the basis of calculation models chosen from at least a model that calculates the emissions of hydrocarbons leaving the engine (12), a model that calculates the conversion of hydrocarbons by an oxidation catalytic converter (19) installed in the exhaust line (11) upstream of the catalytic converter (SCR), a model that calculates the hydrocarbons loading of the catalytic converter (SCR).

10. Management method according to Claim 9, **characterized in that** the model that calculates the emissions of hydrocarbons leaving the engine (12) takes into consideration parameters chosen from at least the speed (N) of the engine (12), the mechanical torque (Ω) delivered by the engine (12), the temperature (T2) of the cooling water of the engine (12).

11. Management method according to either of Claims 9 and 10, **characterized in that** the model that calculates the conversion of hydrocarbons by the oxidation catalytic converter (19) takes into consideration parameters chosen from at least the temperature (T3) of the exhaust gases entering the oxidation catalytic converter (19), the flow rate (Q) of the exhaust gases.

12. Management method according to one of Claims 7 to 11, **characterized in that** the quantity (MH) of hydrocarbons as determined at a previous determining step (E6) is reset to zero when the temperature (T1) of the exhaust gases entering the catalytic converter (SCR) is above a predetermined threshold (ST2).

13. Management method according to Claims 3 and 7, **characterized in that** a step (E1) of regenerating the particle filter (20) is carried out when at least one of the two trigger conditions that respectively take into consideration the determined quantity (MC) of crystals and the determined quantity (MH) of hydrocarbons is met.

14. Motor vehicle propulsion unit, comprising an internal combustion engine (12), an exhaust line (11) for the exhaust gases emitted by the engine (12) and in which a particle filter (20), a catalytic converter (SCR) for the selective catalytic reduction of nitrogen oxides and a device (13) for injecting a reducing agent suited to the operation of the catalytic converter (SCR) are installed, **characterized in that** it comprises an electronic control unit (21) which automatically carries out the management method according to any one of the preceding claims.

15. Motor vehicle, **characterized in that** it comprises a propulsion unit according to Claim 14.

16. Computer program comprising a computer program code means suited to performing the steps of a method according to one of Claims 1 to 13 when the program is run on a processor of the control unit (21).
